# EUROPEAN PATENT APPLICATION

(11) **EP 4 844 543 A1**
(43) Date of publication of application: **25.11.2026**
(21) Application number: 25752433.0
(22) Date of filing: 05.02.2025
(51) Int. Cl.: G06F 3/02, H01H 13/14

(54) **ELECTRONIC DEVICE COMPRISING BUTTON ASSEMBLY**

(30) Priority: 06.02.2024 KR 20240018340; 08.03.2024 KR 20240033484
(71) Applicant: Samsung Electronics Co., Ltd., Suwon-si, Gyeonggi-do 16677 (KR)
(72) Inventor: JANG, Hyunsoo, Suwon-si Gyeonggi-do 16677 (KR); KIM, Taesik, Suwon-si Gyeonggi-do 16677 (KR); BAEK, Kunwoo, Suwon-si Gyeonggi-do 16677 (KR); SONG, Yongjae, Suwon-si Gyeonggi-do 16677 (KR); CHO, Chihyun, Suwon-si Gyeonggi-do 16677 (KR)
(74) Representative: HGF
(86) International application number: PCT/KR2025/001715
(87) International publication number: WO 2025/170321

(57) **Abstract**

The present invention relates to an electronic device. An electronic device according to one embodiment of the present invention comprises: a housing; and a button assembly disposed on at least a portion of a lateral side of the housing. The button assembly comprises: a button configured to be movable in a first direction; a magnet configured to move according to the movement of the button; a coil facing the magnet and configured to provide feedback to the button on the basis of the voltage applied; and a sensor configured to detect changes in electromagnetic force on the basis of the movement of the magnet, and aligned with the coil and the magnet, wherein the magnet is disposed between the button and the coil, and may be disposed between the button and the sensor.

## Description

### [Technical Field]

Embodiments of the disclosure relate to an electronic device, and, e.g., to an electronic device including a button assembly.

### [Background Art]

Owing to the remarkable development of information communication technology and semiconductor technology, the distribution and use of various electronic devices is rapidly increasing. In particular, recent electronic devices have been developed to be portable and to enable communication.

An electronic device may refer to a device that performs a specific function according to a program installed therein, such as a home appliance, an electronic notebook, a portable multimedia player, a mobile communication terminal, a tablet PC, a video/audio device, a desktop/laptop computer, or a vehicle navigation device. For example, such electronic devices may output stored information as sound or image. As the integration density of electronic devices increases and ultra-high-speed and/or large-capacity wireless communication becomes common, recently, various functions may be equipped in a single electronic device such as a mobile communication terminal. For example, not only a communication function but also an entertainment function such as a game, a multimedia function such as music/video playback, a communication and security function such as mobile banking, a schedule management or an electronic wallet function are being integrated into a single electronic device. Such an electronic device is being downsized to be conveniently carried by a user.

An electronic device may include a button for receiving a signal input from the outside. When a physical pressure is applied, the button is drawn into the electronic device to transmit a signal from the outside to a processor inside the device. The button has a switch shape and may generate an electrical signal when a physical press is applied. The button may be driven by a linear resonant actuator (LRA) method using a vibration motor or a method using a piezo actuator.

The above-described information may be provided as related art for the purpose of helping understanding of the disclosure. No assertion or determination is raised as to whether any of the foregoing may be applicable as prior art in connection with the disclosure.

### [Detailed Description of the Invention]

### [Technical Solution]

An electronic device according to an embodiment of the disclosure may include a housing; and a button assembly at least a portion of which is visually exposed to an outside of the housing, wherein the button assembly may include a button movably disposed in the housing; a magnet connected to the button; a coil configured to receive a current supplied thereto and facing the magnet; and a plurality of sensors configured to sense information related to an electromagnetic force between the magnet and the coil and arranged along a direction in which the button extends.

An electronic device according to an embodiment of the disclosure may include a housing; and a button assembly at least a portion of which is visually exposed to an outside of the housing, wherein the button assembly may include a button movably disposed in the housing; a plurality of magnets arranged along a direction in which the button extends; and a plurality of coils corresponding to the plurality of magnets and configured to generate a magnetic force in each of the plurality of magnets.

An electronic device according to an embodiment of the disclosure may include a housing; and a button assembly disposed in at least a portion of a lateral side of the housing, wherein the button assembly may include a button configured to move in a first direction; a magnet configured to move according to a movement of the button; a coil facing the magnet and configured to provide feedback to the button based on a voltage supplied to the coil; and a sensor configured to sense a change in an electromagnetic force based on the movement of the magnet and aligned with the coil and the magnet, wherein the magnet may be disposed between the button and the coil, and between the button and the sensor.

A method for operating an electronic device according to an embodiment of the disclosure may include an operation of moving, in a first direction, a button disposed in at least a portion of a lateral side of a housing together with a magnet; an operation of sensing, by a sensor facing the magnet in the first direction, a change in an electromagnetic force based on a movement of the magnet in the first direction; and an operation of forming a magnetic force between the magnet and a coil based on a voltage supplied to the coil facing the magnet in the first direction.

### [Brief Description of Drawings]

The above-described aspects, or other aspects, configurations and/or advantages of an embodiment of the disclosure may become more apparent through the following detailed description with reference to the accompanying drawings.
FIG. 1 is a block diagram illustrating an electronic device in a network environment according to various embodiments.
FIG. 2 is a perspective view illustrating a front of an electronic device according to an embodiment of the disclosure.
FIG. 3 is a perspective view illustrating a rear of an electronic device according to an embodiment of the disclosure.
FIG. 4 is an exploded perspective view illustrating a front of an electronic device according to an embodiment of the disclosure.
FIG. 5 is an exploded perspective view illustrating a rear of an electronic device according to an embodiment of the disclosure.
FIG. 6 is a view conceptually illustrating a portion of a cross-sectional view of an electronic device according to an embodiment of the disclosure.
FIG. 7A is a view conceptually illustrating a portion of FIG. 6.
FIG. 7B is a view illustrating an operation of a button assembly according to an embodiment of the disclosure.
FIG. 8 is a graph illustrating a change in acceleration according to a voltage according to an embodiment of the disclosure.
FIG. 9A is a graph illustrating a change in voltage over time according to an embodiment of the disclosure.
FIG. 9B is a graph illustrating a change in voltage over time according to an embodiment of the disclosure.
FIG. 9C is a graph illustrating a change in voltage over time according to an embodiment of the disclosure.
FIG. 9D is a graph illustrating a change in voltage over time according to an embodiment of the disclosure.
FIG. 10A is a view conceptually illustrating a signal input through a button assembly according to an embodiment of the disclosure.
FIG. 10B is a view conceptually illustrating feedback through a button assembly according to an embodiment of the disclosure.
FIG. 11 is a view illustrating an operation of a button assembly according to an embodiment of the disclosure.
FIG. 12 is a view illustrating an operation of a button assembly according to an embodiment of the disclosure.
FIG. 13 is a view illustrating an operation of a button assembly according to an embodiment of the disclosure.
FIG. 14 is a view conceptually illustrating a portion of a cross-sectional view of an electronic device according to an embodiment of the disclosure.

Throughout the accompanying drawings, similar reference numerals may be assigned to similar parts, components, and/or structures.

### [Mode for Carrying out the Invention]

The following description with respect to the accompanying drawings may provide an understanding of various exemplary implementations of the disclosure including the claims and equivalents thereof. The exemplary embodiments disclosed in the following description include various specific details to aid in understanding, but these are considered to be one of various exemplary embodiments. Accordingly, those of ordinary skill in the art will understand that various changes and modifications of the various implementations described in the disclosure may be made without departing from the scope and technical spirit of the disclosure. Further, descriptions of well-known functions and configurations may be omitted for clarity and conciseness.

The terms and words used in the following description and claims are not limited to the bibliographical meanings, but may be used to clearly and consistently describe an embodiment of the disclosure. Accordingly, it should be apparent to those of ordinary skill in the art that the following description of various implementations of the disclosure is provided for the purpose of description, not for the purpose of limiting the disclosure as defined by the appended claims and equivalents thereof.

It should be understood that the singular forms "a", "an", and "the" include plural referents unless the context clearly dictates otherwise. Accordingly, for example, reference to "a component surface" may be understood as including one or more of the surfaces of the component.

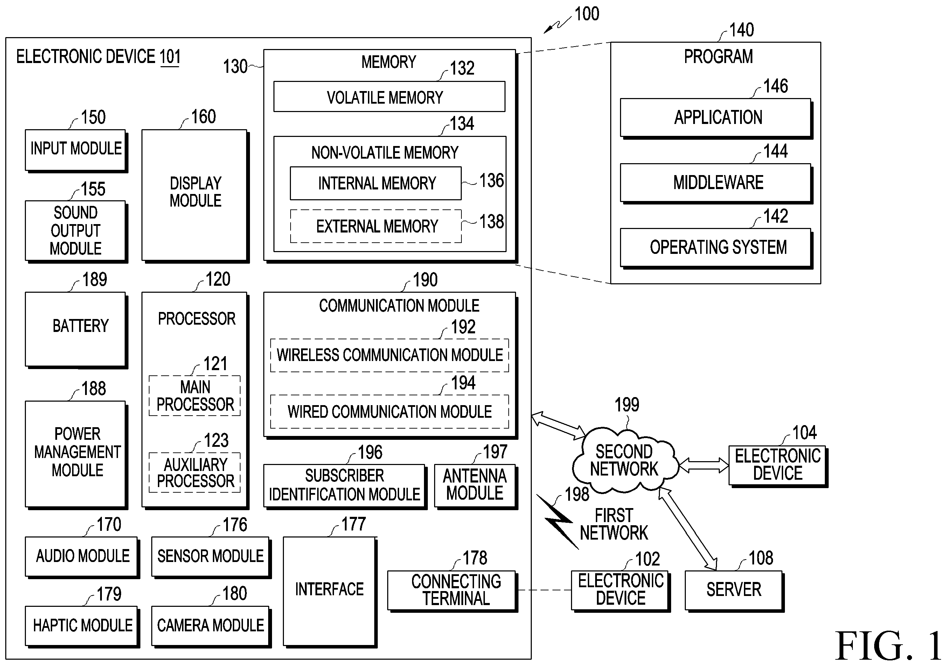

FIG. 1 is a block diagram illustrating an electronic device 101 in a network environment 100 according to various embodiments.

Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, in the electronic device 101, at least one of these components (e.g., the connecting terminal 178) may be omitted, or one or more other components may be added. In some embodiments, some of these components (e.g., the sensor module 176, the camera module 180, or the antenna module 197) may be integrated into a single component (e.g., the display module 160).

The processor 120 may, for example, execute software (e.g., the program 140) to control at least one other component (e.g., a hardware or software component) of the electronic device 101 connected to the processor 120, and may perform various data processing or computations. According to an embodiment, as at least part of the data processing or computation, the processor 120 may store instructions or data received from another component (e.g., the sensor module 176 or the communication module 190) in volatile memory 132, process the instructions or data stored in the volatile memory 132, and store result data in non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of, or together with, the main processor 121. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from, or as a part of, the main processor 121.

The auxiliary processor 123 may, for example, control at least some of functions or states related to at least one component (e.g., the display module 160, the sensor module 176, or the communication module 190) among the components of the electronic device 101 in place of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., the image signal processor or the communication processor) may be implemented as a part of another functionally related component (e.g., the camera module 180 or the communication module 190). According to an embodiment, the auxiliary processor 123 (e.g., the neural processing unit) may include a hardware structure specialized for processing an artificial intelligence model. The artificial intelligence model may be generated through machine learning. Such learning may, for example, be performed by the electronic device 101 itself in which the artificial intelligence model is performed, or may be performed through a separate server (e.g., the server 108). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 130 may store various data used by at least one component (e.g., the processor 120 or the sensor module 176) of the electronic device 101. The data may include, for example, software (e.g., the program 140), and input data or output data for instructions related thereto. The memory 130 may include the volatile memory 132 or the non-volatile memory 134.

The program 140 may be stored as software in the memory 130, and may include, for example, an operating system 142, middleware 144, or an application 146.

The input module 150 may receive instructions or data to be used by a component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 160 may visually provide information to the outside (e.g., a user) of the electronic device 101. The display module 160 may include, for example, a display, a hologram device, or a projector, and a control circuit for controlling the corresponding device. According to an embodiment, the display module 160 may include a touch sensor configured to sense a touch, or a pressure sensor configured to measure the intensity of a force generated by the touch.

The audio module 170 may convert sound into an electrical signal, or vice versa, i.e., may convert an electrical signal into sound. According to an embodiment, the audio module 170 may acquire sound through the input module 150, or may output sound through the sound output module 155 or an external electronic device (e.g., the electronic device 102) (e.g., a speaker or headphones) connected directly or wirelessly to the electronic device 101.

The sensor module 176 may sense an operating state (e.g., power or temperature) of the electronic device 101 or an external environmental state (e.g., a user state), and may generate an electrical signal or data value corresponding to the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be connected directly or wirelessly to an external electronic device (e.g., the electronic device 102). According to an embodiment, the interface 177 may include, for example, a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and videos. According to an embodiment, the camera module 180 may include one or more lenses, image sensors, image signal processors, or flashes.

The power management module 188 may manage power supplied to the electronic device 101. According to an embodiment, the power management module 188 may be implemented, for example, as at least a part of a power management integrated circuit (PMIC).

The battery 189 may supply power to at least one component of the electronic device 101. According to an embodiment, the battery 189 may include, for example, a non-rechargeable primary battery, a rechargeable secondary battery, or a fuel cell.

The communication module 190 may support establishment of a direct (e.g., wired) communication channel or a wireless communication channel between the electronic device 101 and an external electronic device (e.g., the electronic device 102, the electronic device 104, or the server 108), and performance of communication through the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with an external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network beyond a 4G network, and a next-generation communication technology, for example, a new radio access technology (NR). The NR access technology may support high-speed transmission of high-capacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 192 may, for example, support a high-frequency band (e.g., an mmWave band) to achieve a high data transmission rate. The wireless communication module 192 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 197 may transmit a signal or power to the outside (e.g., an external electronic device) or receive it from the outside. According to an embodiment, the antenna module 197 may include an antenna including a radiator made of a conductor or a conductive pattern formed on a substrate (e.g., a PCB). According to an embodiment, the antenna module 197 may include a plurality of antennas (e.g., an array antenna). In such a case, at least one antenna suitable for a communication scheme used in a communication network, such as the first network 198 or the second network 199, may be selected from the plurality of antennas, for example, by the communication module 190. A signal or power may be transmitted or received between the communication module 190 and an external electronic device through the at least one selected antenna. According to some embodiments, in addition to the radiator, another component (e.g., a radio frequency integrated circuit (RFIC)) may additionally be formed as a part of the antenna module 197.

According to various embodiments, the antenna module 197 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 101 and the external electronic device 104 through the server 108 connected to the second network 199. Each of the external electronic devices 102 or 104 may be a device of the same type as, or a different type from, the electronic device 101. According to an embodiment, all or some of the operations executed in the electronic device 101 may be executed in one or more external electronic devices among the external electronic devices 102, 104, or 108. For example, when the electronic device 101 needs to perform a certain function or service automatically, or in response to a request from a user or another device, the electronic device 101 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 101. The electronic device 101 may provide the result, as it is or after additional processing, as at least a part of a response to the request. For this purpose, for example, cloud computing, distributed computing, mobile edge computing (MEC), or client-server computing technology may be used. The electronic device 101 may, for example, provide ultra-low-latency services using distributed computing or mobile edge computing. In an embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

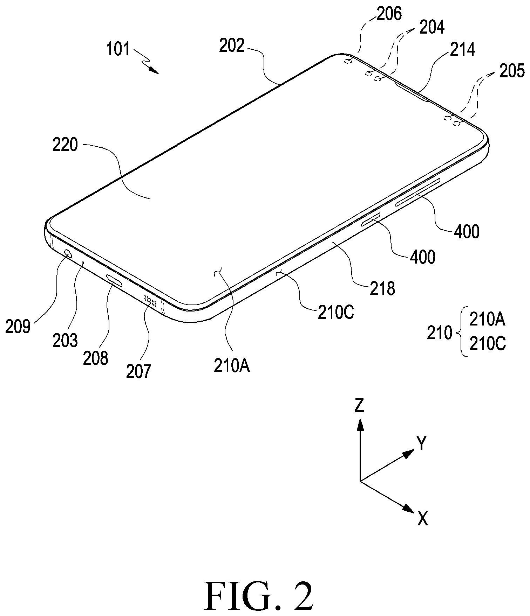

FIG. 2 is a perspective view illustrating a front of an electronic device according to an embodiment of the disclosure.

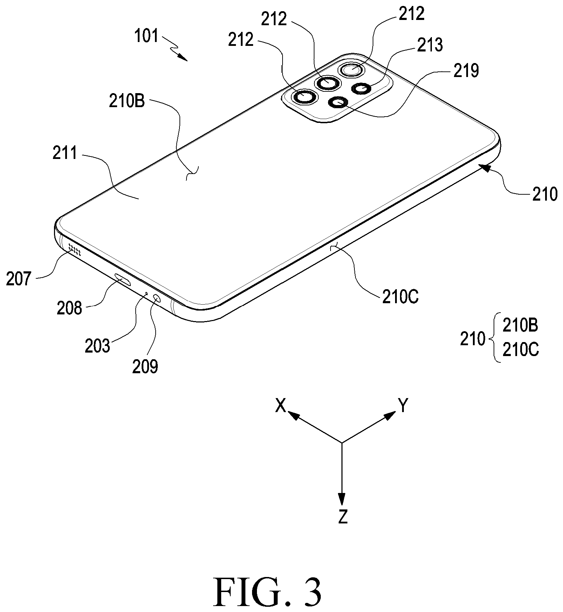

FIG. 3 is a perspective view illustrating a rear of an electronic device according to an embodiment of the disclosure.

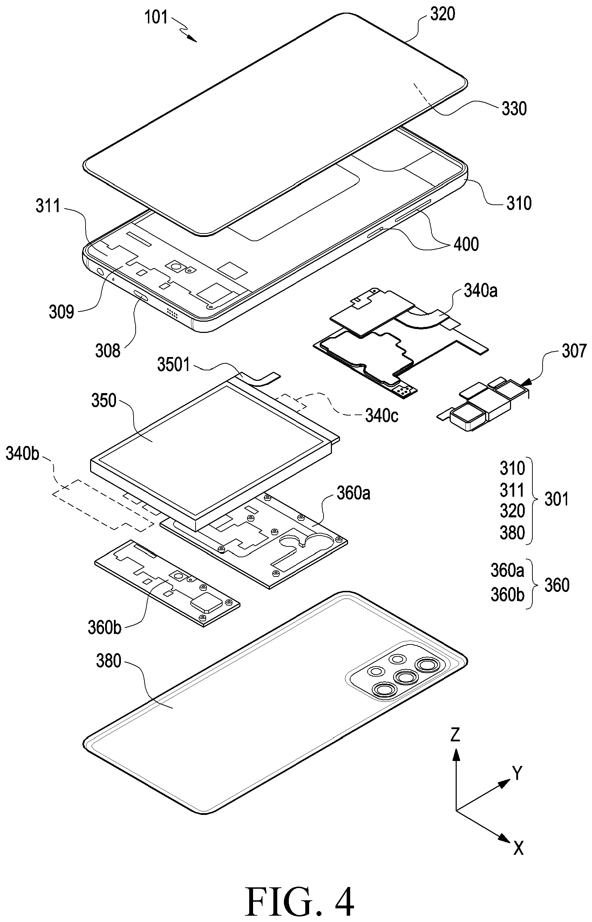

The embodiments of FIGS. 2 to 3 may be combined with the embodiment of FIG. 1 or the embodiments of FIGS. 4 to 14.

Referring to FIGS. 2 to 3, an electronic device 101 (e.g., the electronic device 101 of FIG. 1) according to an embodiment may include a housing 210 including a first surface (or front surface) 210A, a second surface (or rear surface) 210B, and a side surface 210C surrounding a space between the first surface 210A and the second surface 210B. In an embodiment (not illustrated), the housing 210 may refer to a structure forming a portion of the first surface 210A of FIG. 2, the second surface 210B of FIG. 3, and the side surfaces 210C. According to an embodiment, the first surface 210A may be formed by a front plate 202, at least a portion of which is substantially transparent (e.g., a glass plate or a polymer plate including various coating layers). The second surface 210B may be formed by a rear plate 211 that is substantially opaque. The rear plate 211 may be formed by, e.g., coated or colored glass, ceramic, polymer, metal (e.g., aluminum, stainless steel (STS), or magnesium), or a combination of at least two of the materials. The rear plate 211 may form the second surface 210B. The side surface 210C is coupled to the front plate 202 and the rear plate 211, and may be formed by a side structure (or "side bezel structure") 218 including metal and/or polymer. In an embodiment, the rear plate 211 and the side structure 218 may be integrally formed and include the same material (e.g., a metal material such as aluminum).

Although not illustrated, the front plate 202 may include an area(s) that is bent from at least a portion of an edge toward the rear plate 211 and seamlessly extended. In an embodiment, the front plate 202 (or the rear plate 211) may include only one of the areas bent toward and extended to the rear plate 211 (or the front plate 202) at one side edge of the first surface 210A. According to an embodiment, the front plate 202 or the rear plate 211 may have a substantially flat shape. For example, the front plate 202 or the rear plate 211 may not include a bent and extended area. In a case of including a bent and extended area, a thickness of the electronic device 101 at a portion including the bent and extended area may be less than a thickness of another portion.

According to an embodiment, the electronic device 101 may include at least one of a display 220, audio modules 203, 207, 214, sensor modules 204, 219, camera modules 205, 212, 213, a button assembly 400, a light emitting element 206, and connector holes 208, 209. In an embodiment, the electronic device 101 may omit at least one of the components (e.g., the light emitting element 206) or may additionally include another component.

The display 220 may be visually exposed through, e.g., a substantial portion of the front plate 202. In an embodiment, at least a portion of the display 220 may be visually exposed through the front plate 202 forming the first surface 210A or through a portion of the side surface 210C. In an embodiment, an edge of the display 220 may be formed substantially the same as an adjacent outer shape of the front plate 202. In an embodiment (not illustrated), in order to expand an area in which the display 220 is visually exposed, a gap between an outer edge of the display 220 and an outer edge of the front plate 202 may be formed substantially the same.

In an embodiment (not illustrated), a recess or an opening may be formed in a portion of a screen display area of the display 220, and at least one of an audio module 214, a sensor module 204, a camera module 205, and a light emitting element 206 aligned with the recess or the opening may be included. In an embodiment (not illustrated), at least one of an audio module 214, a sensor module 204, a camera module 205, a fingerprint sensor (not illustrated), and a light emitting element 206 may be included on a rear surface of a screen display area of the display 220. In an embodiment (not illustrated), the display 220 may be coupled to or disposed adjacent to a touch sensing circuit, a pressure sensor capable of measuring an intensity (pressure) of a touch, and/or a digitizer detecting a magnetic field type stylus pen.

The audio modules 203, 207, 214 may include a microphone hole 203 and speaker holes 207, 214. A microphone for acquiring external sound may be disposed inside the microphone hole 203, and in an embodiment, a plurality of microphones may be arranged to sense a direction of the sound. The speaker holes 207, 214 may include an external speaker hole 207 and a call receiver hole 214. In an embodiment, the speaker holes 207, 214 and the microphone hole 203 may be implemented as one hole, or a speaker may be included without the speaker holes 207, 214 (e.g., a piezo speaker).

The sensor modules 204, 219 may generate an electrical signal or a data value corresponding to an operating state of an inside of the electronic device 101 or an environmental state of an outside. The sensor modules 204, 219 may include, e.g., a first sensor module 204 (e.g., a proximity sensor) and/or a second sensor module (not illustrated) (e.g., a fingerprint sensor) disposed on the first surface 210A of the housing 210, and/or a third sensor module 219 and/or a fourth sensor module (e.g., a fingerprint sensor) disposed on the second surface 210B of the housing 210. The fingerprint sensor may be disposed on the first surface 210A (e.g., the display 220) of the housing 210 as well as on the second surface 210B or the side surface 210C. The electronic device 101 may further include, e.g., at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212, 213 may include a first camera device 205 disposed on the first surface 210A of the electronic device 101, a second camera device 212 disposed on the second surface 210B, and/or a flash 213. The camera devices 205, 212 may include one or a plurality of lenses, an image sensor, and/or an image signal processor. The flash may include, e.g., a light emitting diode or a xenon lamp. In an embodiment, two or more lenses (an infrared camera, a wide-angle lens, and a telephoto lens) and image sensors may be disposed on one surface of the electronic device 101. In an embodiment, the flash 213 may emit infrared rays, and the infrared rays emitted by the flash 213 and reflected by a subject may be received through the third sensor module 219. The electronic device 101 or a processor of the electronic device 101 may detect depth information of the subject based on a time point at which the infrared rays are received at the third sensor module 219.

The button assembly 400 may be disposed on the side surface 210C of the housing 210. In an embodiment, the button assembly 400 may include a sensor module disposed on the second surface 210B of the housing 210. The button assembly 400 may be referred to as a "key input device." The button assembly 400 may be disposed on the rear surface of the housing 210.

The light emitting element 206 may be disposed, e.g., on the first surface 210A of the housing 210. The light emitting element 206 may provide, e.g., state information of the electronic device 101 in a light form. In an embodiment, the light emitting element 206 may provide, e.g., a light source interworking with an operation of the camera module 205. The light emitting element 206 may include, e.g., a light emitting diode (LED), an IR LED, and a xenon lamp.

The connector holes 208, 209 may include a first connector hole 208 capable of accommodating a connector (e.g., a USB connector) for transmitting/receiving power and/or data to/from an external electronic device, and/or a second connector hole (e.g., an earphone jack) 209 capable of accommodating a connector for transmitting/receiving an audio signal to/from an external electronic device.

FIG. 4 is an exploded perspective view illustrating a front of an electronic device according to an embodiment of the disclosure.

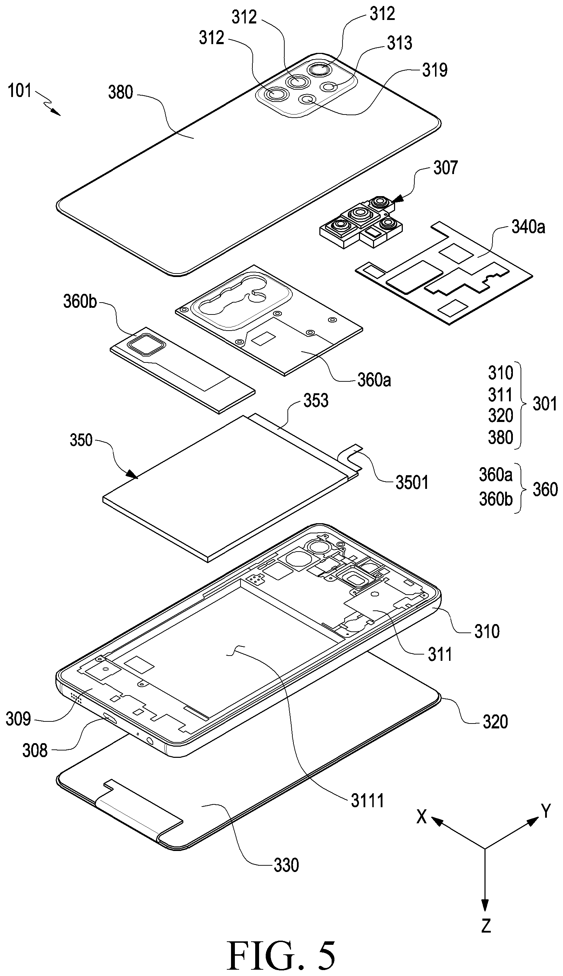

FIG. 5 is an exploded perspective view illustrating a rear of an electronic device according to an embodiment of the disclosure.

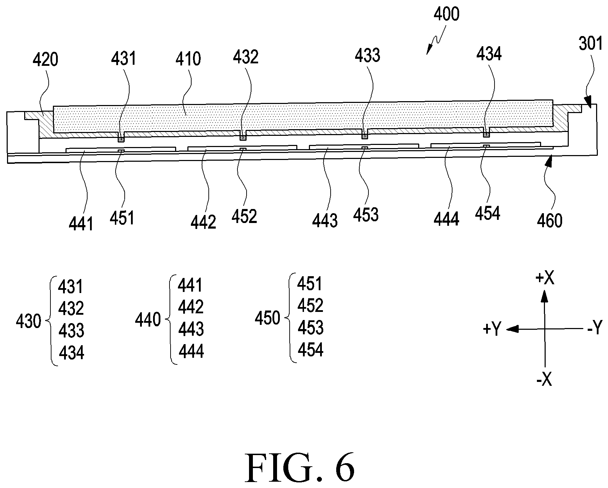

The embodiments of FIGS. 4 to 5 may be combined with the embodiments of FIGS. 1 to 3 or the embodiments of FIGS. 6 to 14.

Referring to FIGS. 3 and 4, an electronic device 101 (e.g., the electronic device 101 of FIG. 1 or FIG. 2) may include a side structure 310, a first support member 311 (e.g., a bracket), a front plate 320 (e.g., the front plate 202 of FIG. 2), a display 330 (e.g., the display 220 of FIG. 2), at least one printed circuit board (or board assembly) 340a, 340b, a battery 350 (e.g., the battery 189 of FIG. 1), a second support member 360 (e.g., a rear case), an antenna, a camera assembly 307, and a rear plate 380 (e.g., the rear plate 211 of FIG. 3). When the electronic device 101 includes a plurality of printed circuit boards 340a, 340b, the electronic device 101 may electrically connect different printed circuit boards by including at least one flexible printed circuit board 340c. For example, the printed circuit boards 340a, 340b may include a first circuit board 340a disposed above the battery 350 (e.g., in a +Y-axis direction) and a second circuit board 340b disposed below the battery 350 (e.g., in a -Y-axis direction), and the flexible printed circuit board 340c may electrically connect the first circuit board 340a and the second circuit board 340b.

According to an embodiment, the electronic device 101 may omit at least one of the components (e.g., the first support member 311 or the second support member 360) or may additionally include another component. At least one of the components of the electronic device 101 may be the same as or similar to at least one of the components of the electronic device 101 of FIG. 2 or FIG. 3, and a duplicate description is omitted below.

At least a portion of the first support member 311 may be provided in a flat plate shape. In an embodiment, the first support member 311 may be disposed inside the electronic device 101 and connected to the side structure 310, or may be integrally formed with the side structure 310. The first support member 311 may be formed of, e.g., a metal material and/or a non-metal (e.g., polymer) material. When the first support member 311 is at least partially formed of a metal material, a portion of the side structure 310 or the first support member 311 may function as an antenna. The display 330 may be coupled to one surface of the first support member 311, and the printed circuit boards 340a, 340b may be coupled to the other surface thereof. A processor (e.g., the processor 120 of FIG. 1), memory (e.g., the memory 130 of FIG. 1), and/or an interface (e.g., the interface 177 of FIG. 1) may be mounted on the printed circuit boards 340a, 340b. The processor may include, e.g., one or more of a central processing unit, an application processor, a graphics processing unit, an image signal processor, a sensor hub processor, or a communication processor.

According to an embodiment, the housing 301 may include the first support member 311 and the side structure 310. According to an embodiment, the housing 301 may be understood as a structure for accommodating, protecting, or arranging the printed circuit boards 340a, 340b or the battery 350. In an embodiment, the housing 301 may be understood to include structures visually or tactilely perceivable by a user from an exterior of the electronic device 101, e.g., the side structure 310, the front plate 320, and/or the rear plate 380. For example, the housing 301 may include structures (e.g., the side structure 310, the front plate 320, the rear plate 380) forming an exterior of the electronic device 101. The housing 301 may be substantially the same as the housing 210 described with reference to FIGS. 2 and 3. In an embodiment, "the front or rear of the housing 301" may refer to the first surface 210A of FIG. 2 or the second surface 210B of FIG. 3. In an embodiment, the first support member 311 is disposed between the front plate 320 (e.g., the first surface 210A of FIG. 2) and the rear plate 380 (e.g., the second surface 210B of FIG. 3), and may function as a structure for arranging electrical/electronic components such as the printed circuit boards 340a, 340b or the camera assembly 307. The button assembly 400 may be disposed on the side structure 310 of the housing 301. The button assembly 400 may be visually exposed to an outside of the housing 301 through the side structure 310. The side structure 310 may be referred to as a "side portion." The button assembly 400 may be disposed on the side portion 310 of the housing 310.

The memory may include, e.g., a volatile memory (e.g., the volatile memory 132 of FIG. 1) or a non-volatile memory (e.g., the non-volatile memory 134 of FIG. 1).

The interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device, and may include a USB connector, an SD card/multimedia card (MMC) connector, or an audio connector.

The second support member 360 may include, e.g., an upper support member 360a or a lower support member 360b. In an embodiment, the upper support member 360a may be disposed to surround a printed circuit board (e.g., the first circuit board 340a) together with a portion of the first support member 311. For example, the upper support member 360a of the second support member 360 may be disposed to face the first support member 311 with the first circuit board 340a interposed therebetween. In an embodiment, the lower support member 360b of the second support member 360 may be disposed to face the first support member 311 with the second circuit board 340b interposed therebetween. A circuit device (e.g., a processor, a communication module, or memory) or various electrical/electronic components implemented in the form of an integrated circuit chip may be disposed on the printed circuit boards 340a, 340b, and according to an embodiment, the printed circuit boards 340a, 340b may be provided with an electromagnetic shielding environment from the second support member 360. In an embodiment, the lower support member 360b may be utilized as a structure capable of arranging electrical/electronic components such as a speaker module or an interface (e.g., a USB connector, an SD card/MMC connector, or an audio connector). In an embodiment, electrical/electronic components such as a speaker module or an interface (e.g., a USB connector, an SD card/MMC connector, or an audio connector) may be disposed on an additional printed circuit board (not illustrated). For example, the lower support member 360b may be disposed to surround an additional printed circuit board (e.g., the second printed circuit board 340b) together with another portion of the first support member 311. The speaker module or the interface disposed on the additional printed circuit board (not illustrated) or the lower support member 360b may be disposed to correspond to the audio module 207 or the connector holes 208, 309 of FIG. 2.

The battery 350 is a device for supplying power to at least one component of the electronic device 101, and may include, e.g., a non-rechargeable primary battery, a rechargeable secondary battery, or a fuel cell. At least a portion of the battery 350 may be disposed, e.g., substantially on the same plane as the printed circuit boards 340a, 340b. The battery 350 may be integrally disposed inside the electronic device 101, or may be disposed detachably from the electronic device 101.

Although not illustrated, the antenna may include, e.g., a conductor pattern implemented on a surface of the second support member 360 through a laser direct structuring process. In an embodiment, the antenna may include a printed circuit pattern formed on a surface of a thin film, and the antenna in the form of a thin film may be disposed between the rear plate 380 and the battery 350. The antenna may include, e.g., a near field communication (NFC) antenna, a wireless charging antenna, and/or a magnetic secure transmission (MST) antenna. The antenna may, e.g., perform short-range communication with an external device, or wirelessly transmit/receive power required for charging. In an embodiment, another antenna structure may be formed by the side structure 310 and/or a portion of the first support member 311 or a combination thereof.

According to an embodiment, the camera assembly 307 may include at least one camera module. Inside the electronic device 101, the camera assembly 307 (or the at least one camera module) may receive at least a portion of light incident through an optical hole or a camera window. In an embodiment, the camera assembly 307 may be disposed on the first support member 311 at a position adjacent to the printed circuit boards 340a, 340b. In an embodiment, the camera module(s) of the camera assembly 307 may be substantially aligned with one of the camera windows, and may be at least partially surrounded by the second support member 360 (e.g., the upper support member 360a).

According to an embodiment, the electronic device 101 may include camera holes 312, 313, 319. A plurality of camera holes 312, 313, 319 may be disposed to be spaced apart from each other. The camera assembly 307 may receive light passing through the camera holes 312, 313, 319.

According to an embodiment, the first support member 311 may include an accommodating portion 3111. The battery 350 may be disposed in the accommodating portion 3111. The battery 350 may include a terrace 353. The terrace 353 may protrude toward the printed circuit board 340. The battery 350 may include a battery connection member 3501 connecting the terrace 353 and the printed circuit board 340.

According to an embodiment, the electronic device 101 may include a port insertion opening 308. The port insertion opening 308 may be opened in a portion of the housing 301. The port insertion opening 308 may communicate with an external space of the housing 301. The electronic device 101 may be connected to an external device (e.g., a USB port, a charging wire), and the external device may be inserted into the port insertion opening 308.

According to an embodiment, the electronic device 101 may include an antenna 309. The antenna 309 may be disposed at a position adjacent to the port insertion opening 308.

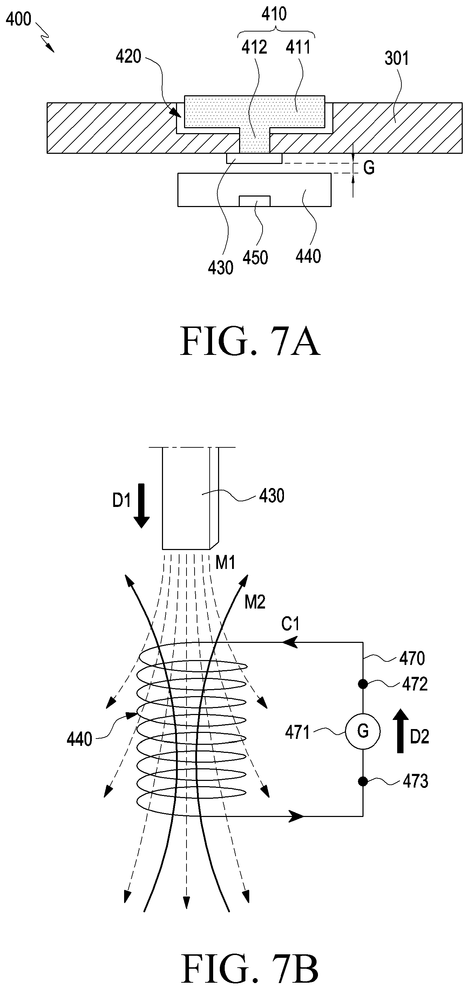

FIG. 6 is a view conceptually illustrating a cut area in which the button assembly 400 illustrated in FIGS. 2 to 5 is disposed. The components described with reference to FIG. 6 may be partially or entirely the same as the components described with reference to FIGS. 1 to 5. The components described with reference to FIG. 6 may be partially or entirely the same as the components described with reference to FIGS. 7A to 14.

According to an embodiment, the electronic device 101 may include the button assembly 400. The button assembly 400 may be disposed in the housing 301. The button assembly 400 may be disposed in at least a portion of a lateral side of the housing 301. The button assembly 400 may be visually exposed to an outside of the housing 301. The button assembly 400 may be configured to be touchable. The button assembly 400 may be disposed on a side portion (e.g., the side structure 310 of FIGS. 4 and 5) of the housing 301. The button assembly 400 may be referred to as a "key input device." The button assembly 400 may be referred to as an "input device." The button assembly 400 may be referred to as a "haptic device." The button assembly 400 may be referred to as a "feedback device."

According to an embodiment, the button assembly 400 may include a button 410. The button 410 may be visually exposed to the outside of the housing 301. The button 410 may be configured to be touchable. A user may manipulate the button 410 to input a signal to the button assembly 410.

According to an embodiment, the button assembly 400 may include a support member 420. The support member 420 may be disposed between the button 410 and the housing 301. The support member 420 may support the button 410. The support member 420 may include a deformable material. For example, the support member 420 may include a rubber material. When a press is applied to the button 410, a portion of the support member 420 may be deformed. The support member 420 may be referred to as a "buffer member." The support member 420 may be referred to as an "elastic member."

According to an embodiment, the button assembly 400 may include a plurality of magnets 430. The plurality of magnets 430 may be arranged along a second direction (e.g., a +Y direction) in which the button 410 extends. The plurality of magnets 430 may be spaced apart from each other along the second direction in which the button 410 extends. The plurality of magnets 430 may be connected to the button 410. The plurality of magnets 430 may be disposed inside the button 410. The plurality of magnets 430 may be disposed inside the support member 420. The plurality of magnets 430 may move together with the button 410. The plurality of magnets 430 may protrude from the button 410 toward an inside of the housing 301. The plurality of magnets 430 may pass through the support member 420 and be connected to the button 410. The plurality of magnets 430 may be connected to the support member 420. The plurality of magnets 430 may be indirectly connected to the button 410 through the support member 420. The plurality of magnets 430 may be referred to as a "plurality of magnetic bodies." The plurality of magnets 430 may be replaced with "a plurality of conductive members." For example, a button assembly according to an embodiment of the disclosure may include a plurality of conductive members instead of the plurality of magnets 430, and the plurality of conductive members may include a metal material. The plurality of magnets 430 may be replaced with "a plurality of second coils." For example, a button assembly according to an embodiment of the disclosure may include a plurality of second coils instead of the plurality of magnets 430, and a current may be supplied to the plurality of second coils.

According to an embodiment, the plurality of magnets 430 may include a first magnet 431 and a second magnet 432. The first magnet 431 and the second magnet 432 may be spaced apart in the second direction (e.g., the +Y direction) in which the button 410 extends. The plurality of magnets 430 may include a third magnet 433. The third magnet 433 may be spaced apart from the second magnet 432 in the second direction. The second magnet 432 may be positioned between the first magnet 431 and the third magnet 433. The plurality of magnets 430 may include a fourth magnet 434. The fourth magnet 434 may be spaced apart from the third magnet 433 in the second direction. The third magnet 433 may be positioned between the second magnet 432 and the fourth magnet 434. The number of the plurality of magnets 430 is not limited to what is described above.

According to an embodiment, the button assembly 400 may include a plurality of coils 440. The plurality of coils 440 may be arranged along the second direction (e.g., the +Y direction) in which the button 410 extends. The plurality of coils 440 may be spaced apart from each other along the second direction in which the button 410 extends. The plurality of coils 440 may correspond to the plurality of magnets 430, respectively. For example, the plurality of coils 440 may include a first coil 441 facing the first magnet 431 and a second coil 442 facing the second magnet 432. For example, the plurality of coils 440 may include a third coil 443 facing the third magnet 433. For example, the plurality of coils 440 may include a fourth coil 444 facing the fourth magnet 434. The plurality of coils 440 may be spaced apart from the plurality of magnets 430. For example, the first magnet 431 and the first coil 441 may be spaced apart from each other. For example, the second magnet 432 and the second coil 442 may be spaced apart from each other. The number of the plurality of coils 440 is not limited to what is described above.

According to an embodiment, the button assembly 400 may include a plurality of sensors 450. The plurality of sensors 450 may be arranged along the second direction (e.g., the +Y direction) in which the button 410 extends. The plurality of sensors 450 may be spaced apart from each other along the second direction in which the button 410 extends. The plurality of sensors 450 may correspond to the plurality of magnets 430, respectively. For example, the plurality of sensors 450 may include a first sensor 451 facing the first magnet 431 and a second sensor 452 facing the second magnet 432. For example, the plurality of sensors 450 may include a third sensor 453 facing the third magnet 433. For example, the plurality of sensors 450 may include a fourth sensor 454 connected to the fourth magnet 434. The plurality of sensors 450 may sense an electromagnetic force formed by the plurality of magnets 430. For example, the plurality of sensors 450 may sense a change in magnetic flux formed by the plurality of magnets 430. The plurality of sensors 450 may include a Hall IC sensor. The plurality of sensors 450 may include a proximity sensor. The plurality of sensors 450 may include an acceleration sensor. The number of the plurality of sensors 450 is not limited to what is described above.

According to an embodiment, the magnet 430 may move in a first direction (e.g., a -X direction). The first direction may be orthogonal to the second direction (e.g., the +Y direction). The first direction may be defined as a movement direction of the magnet 430. The second direction may be defined as a direction in which the button 410 extends. The magnet 430, the coil 440, and the sensor 450 may be arranged in the first direction. The first direction may be defined as a direction in which the magnet 430, the coil 440, and the sensor 450 are arranged.

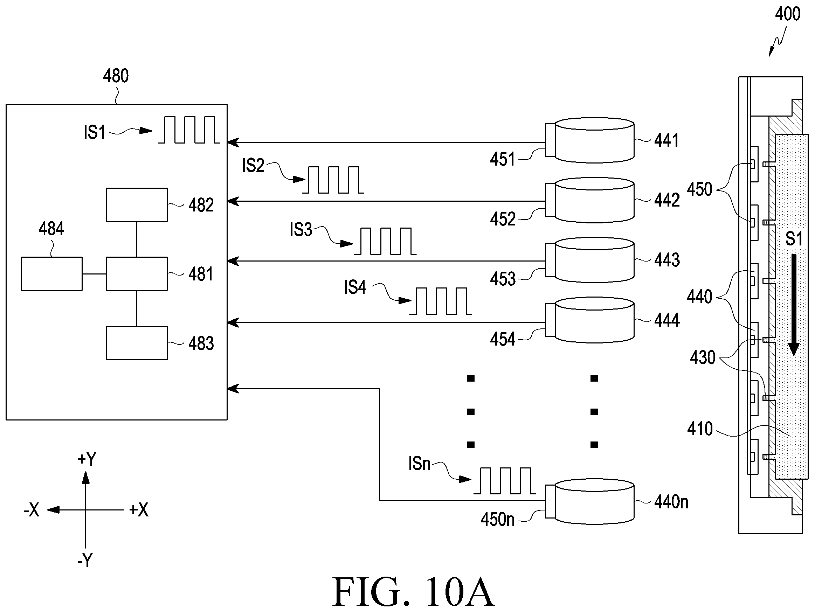

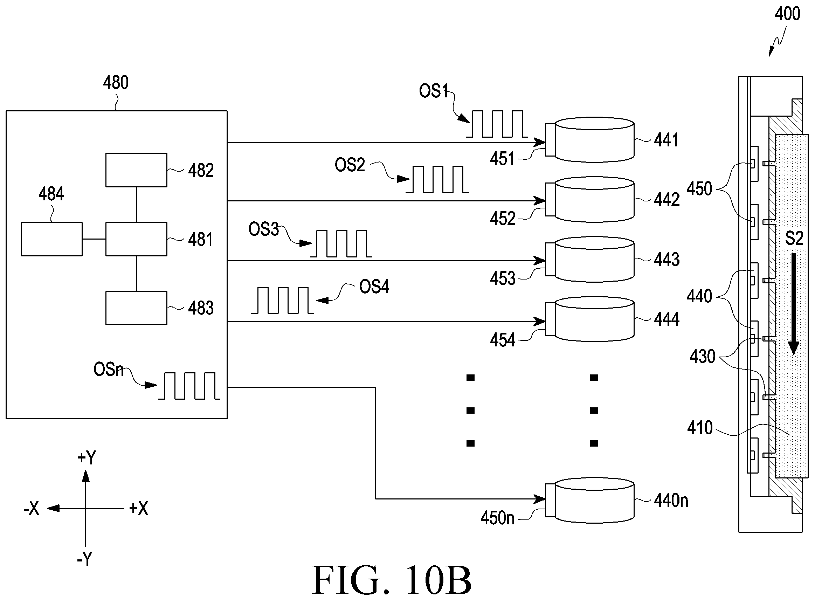

According to an embodiment, the button assembly 400 may include a button assembly circuit board 460. The button assembly circuit board 460 may be disposed inside the housing 301. The button assembly circuit board 460 may be connected to a printed circuit board (e.g., the printed circuit board 340a of FIGS. 4 and 5). The button assembly circuit board 460 may be supplied with power from a battery (e.g., the battery 350 of FIGS. 4 and 5). The battery 350 may supply power to the button assembly circuit board 460 through the printed circuit board 340a. The button assembly circuit board 460 may include a flexible printed circuit board (FPCB). The plurality of coils 440 may be disposed on the button assembly circuit board 460. The plurality of coils 440 may be supplied with power from the battery 350 through the button assembly circuit board 460. The plurality of sensors 450 may be disposed on the button assembly circuit board 460. The plurality of sensors 450 may be supplied with power from the battery 350 through the button assembly circuit board 460. The plurality of sensors 450 may transmit a signal related to an electromagnetic force generated by the plurality of magnets 430 to the printed circuit board 340a through the button assembly circuit board 460. The button assembly circuit board 460 may include a driving chip (e.g., the driving chip 480 of FIGS. 10A and 10B). The plurality of sensors 450 may transmit a signal related to an electromagnetic force generated by the plurality of magnets 430 to a signal processing part (e.g., the signal processing part 481 of FIGS. 10A and 10B) of the driving chip 480.

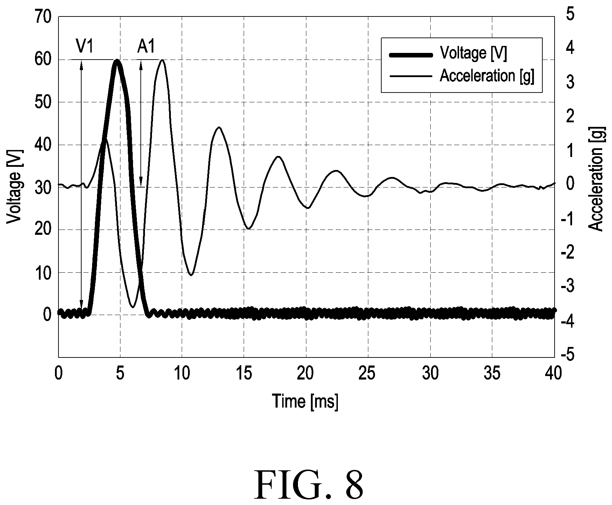

FIG. 7A is a view exemplarily illustrating one of the plurality of magnets 430, one of the plurality of coils 440, and one of the plurality of sensors 450. FIG. 7B is a view illustrating an operation of the button assembly 400. The components described with reference to FIGS. 7A and 7B may be partially or entirely the same as the components described with reference to FIGS. 1 to 6. The components described with reference to FIGS. 7A and 7B may be partially or entirely the same as the components described with reference to FIGS. 8 to 14.

According to an embodiment, the button 410 may be movably disposed in the housing 301. The support member 420 may be disposed between the button 410 and the housing 301 to support the button 410.

According to an embodiment, the plurality of magnets 430 may be referred to as a "magnet." The magnet 430 may be connected to the button 410. The magnet 430 may be connected to the support member 420, and may be indirectly connected to the button 410 through the support member 420. The magnet 430 may move together with the button 410. The button 410 may include a first body 411 and a second body 412. The second body 412 may protrude from the first body 411 toward the inside of the housing 301. The magnet 430 may be connected to the second body 412. When the button 410 is pressed, the magnet 430 may move toward the sensor 450. The magnet 430 may be spaced apart from the sensor 450. A gap G1 between the magnet 430 and the sensor 450 may change when the magnet 430 moves. For example, when the button 410 is pressed, the magnet 430 may move toward the sensor 450, and the gap G1 between the magnet 430 and the sensor 450 may decrease.

According to an embodiment, the plurality of coils 440 may be referred to as a "coil." The coil 440 may be spaced apart from the magnet 430. A current may be supplied to the coil 440. An electromagnetic force may be formed between the coil 440 and the magnet 430. A gap G between the coil 440 and the magnet 430 may change when the magnet 430 moves. For example, when the button 410 is pressed, the magnet 430 may move toward the coil 440, and the gap G between the magnet 430 and the coil 440 may decrease.

According to an embodiment, the plurality of sensors 450 may be referred to as a "sensor." The sensor 450 may face the magnet 430. The sensor 450 may sense a change in an electromagnetic force generated by the magnet 430. The sensor 450 may sense a change in magnetic flux between the magnet 430 and the sensor 450. The sensor 450 may include a Hall IC sensor. The sensor 450 may include a magnetic field sensor. The sensor 450 may include a proximity sensor.

According to an embodiment, the button assembly 400 may include a circuit 470. The circuit 470 may be disposed on a button assembly circuit board (e.g., the button assembly circuit board 460 of FIG. 6). The circuit 470 may be connected to the coil 440. The coil 440 may receive a current supplied thereto through the circuit 470.

According to an embodiment, the sensor 450 may sense a press of the button 410 based on a magnitude of an induced current C1 flowing through the coil 440 due to the movement of the magnet 430. For example, an electromagnetic force may be formed between the magnet 430 and the coil 440. The electromagnetic force may be formed by Faraday's law of electromagnetic induction. Due to a change in the gap G between the magnet 430 and the coil 440, the induced current C1 may flow through the circuit 470. For example, as illustrated in FIG. 7B, when the magnet 430 moves in a first direction D1 toward the coil 440, the induced current C1 may flow through the circuit 470. For example, as illustrated in FIG. 7B, the magnet 430 may form a magnetic field in a first magnetic field direction M1, and the coil 440 may form a magnetic field in a second magnetic field direction M2 opposite to the first magnetic field direction M1 due to the induced current C1. Referring to FIG. 7B, a repulsive force may be formed between the magnet 430 and the coil 440. The sensor 450 may sense the electromagnetic force formed between the magnet 430 and the coil 440. The sensor 450 may sense a magnitude of the induced current C1 flowing through the circuit 470. For example, the circuit 470 may include a galvanometer 471 disposed between a first position 472 and a second position 473. The galvanometer 471 may be configured to sense a direction D2 and a magnitude of the induced current C1 flowing through the circuit 470. For example, the sensor 450 may be connected to the galvanometer 471, and may receive information about the induced current C1 sensed by the galvanometer 471. For example, the sensor 450 may transmit the information about the induced current C1 received from the galvanometer 471 to a signal processing device (e.g., the signal processing device 481 of FIGS. 10A and 10B) of the driving chip (e.g., the driving chip 480 of FIGS. 10A and 10B), and the driving chip 480 may sense a press of the button 410 based on the information. The sensor 450 may sense the gap G between the magnet 430 and the coil 440. The sensor 450 may sense a magnitude of the second magnetic field formed by the coil 440. However, the operation of sensing the press of the button 410 based on the magnitude of the induced current C1 flowing through the coil 440 due to the movement of the magnet 430, as described with reference to FIG. 7B, may be an embodiment of the disclosure. For example, as described with reference to FIG. 7A, the button assembly 400 according to an embodiment of the disclosure may sense the press of the button 410 based on a change in magnetic flux between the magnet 430 and the sensor 450.

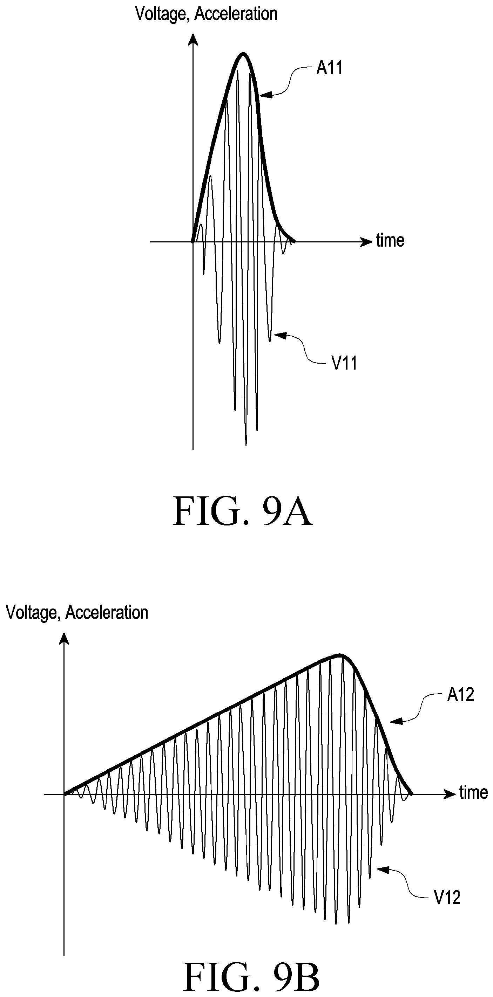

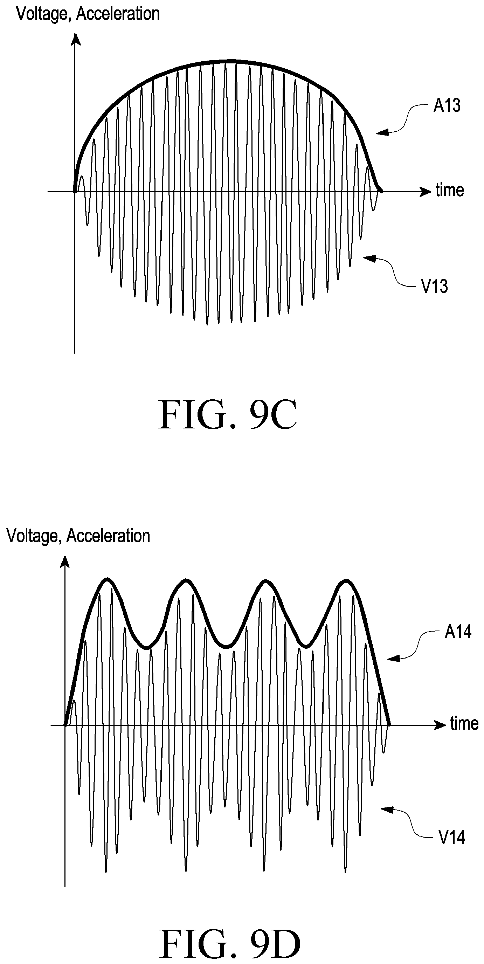

FIG. 8 is a graph exemplarily illustrating a change in the voltage supplied to the coil 440 and a corresponding movement of the button 410 based on an acceleration. FIG. 9A illustrates an example of a change in the voltage supplied to the coil 440 and an acceleration at which the button 410 operates accordingly. FIG. 9B illustrates an example of a change in the voltage supplied to the coil 440 and an acceleration at which the button 410 operates accordingly. FIG. 9C illustrates an example of a change in the voltage supplied to the coil 440 and an acceleration at which the button 410 operates accordingly. FIG. 9D illustrates an example of a change in the voltage supplied to the coil 440 and an acceleration at which the button 410 operates accordingly. The components described with reference to FIGS. 8 to 9D may be partially or entirely the same as the components described with reference to FIGS. 1 to 7B. The components described with reference to FIGS. 8 to 9D may be partially or entirely the same as the components described with reference to FIGS. 10A to 14.

According to an embodiment, a movement of the button 410 may be determined based on a voltage supplied to the coil 440. For example, referring to FIG. 8, the button 410 may move at a maximum acceleration A1 after an intensity V1 of the voltage supplied to the coil 440 reaches a maximum. The electronic device 101 according to an embodiment of the disclosure may adjust a feedback signal (output signal) transmitted through the button 410 by adjusting an intensity of a voltage supplied to the coil 440, a shape of a wave of the voltage, or a time during which the voltage is supplied. For example, when a voltage is supplied to the coil 440 as illustrated in FIG. 8, the button 410 may move instantaneously at an acceleration having a large amplitude A1 to provide an instantaneous vibration sensation to the user.

In the description with reference to FIGS. 9A to 9D, an X-axis may represent a flow of time. A Y-axis may represent a voltage supplied to the coil 440 and an acceleration at which the button 410 operates. The graphs described with reference to FIGS. 9A to 9D may represent a voltage that changes over time and a change in acceleration at which the button 410 operates according to the change in voltage.

Referring to FIG. 9A, when a voltage is supplied to the coil 440 as in a first voltage waveform V11, the button 410 may move according to a first acceleration waveform A11. When a voltage is supplied in the form as in FIG. 9A, the button assembly 400 may provide a click sensation to the user. A voltage waveform in the form as in FIG. 9A may be referred to as a "click waveform."

Referring to FIG. 9B, when a voltage is supplied to the coil 440 as in a second voltage waveform V12, the button 410 may move according to a second acceleration waveform A12. When a voltage is supplied in the form as in FIG. 9B, the button assembly 400 may provide a click sensation for a longer time to the user compared to FIG. 9A. A voltage waveform in the form as in FIG. 9B may be referred to as a "ramps waveform."

Referring to FIG. 9C, when a voltage is supplied to the coil 440 as in a third voltage waveform V13, the button 410 may move according to a third acceleration waveform A13. When a voltage is supplied in the form as in FIG. 9C, the button assembly 400 may provide a buzz to the user. A voltage waveform in the form as in FIG. 9C may be referred to as a "buzz waveform."

Referring to FIG. 9D, when a voltage is supplied to the coil 440 as in a fourth voltage waveform V14, the button 410 may move according to a fourth acceleration waveform A14. When a voltage is supplied in the form as in FIG. 9D, the button assembly 400 may provide a pulse to the user. A voltage waveform in the form as in FIG. 9D may be referred to as a "pulse waveform."

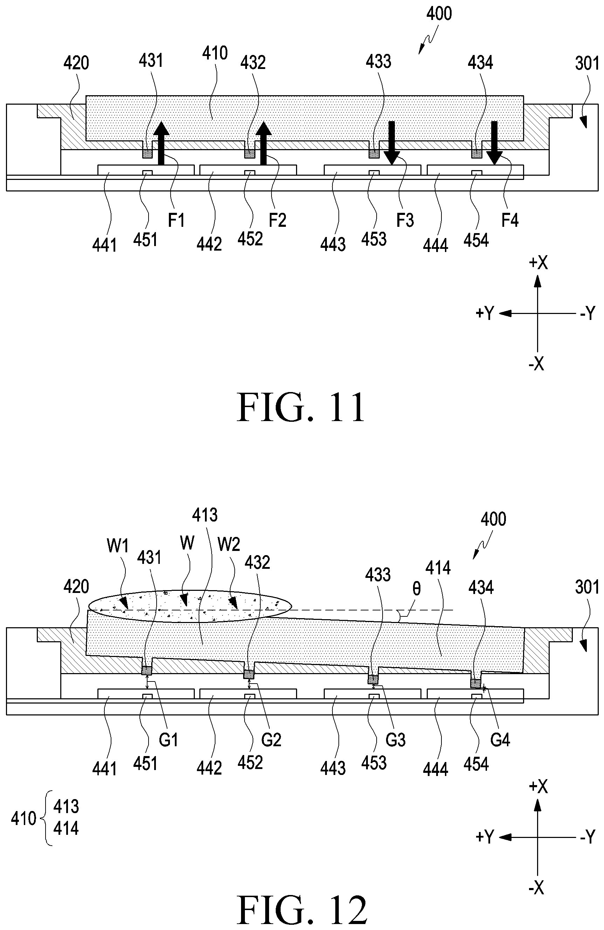

FIG. 10A is a view illustrating that an input signal is transmitted to the driving circuitry 480. FIG. 10B is a view illustrating that an output signal is transmitted from the driving circuitry 480. The components described with reference to FIGS. 10A and 10B may be partially or entirely the same as the components described with reference to FIGS. 1 to 9D. The components described with reference to FIGS. 10A and 10B may be partially or entirely the same as the components described with reference to FIGS. 11 to 14.

According to an embodiment, the button assembly 400 may include driving circuitry 480. The driving circuitry 480 may be referred to as "circuitry." The driving circuitry 480 may be disposed on the button assembly circuit board (e.g., the button assembly circuit board 460 of FIG. 6). The driving circuitry 480 may be connected to a printed circuit board (e.g., the printed circuit board 340a of FIGS. 4 and 5) through the button assembly circuit board 460.

According to an embodiment, the driving circuitry 480 may include a signal processing part 481. The driving circuitry 480 may include an input part 482. The driving circuitry 480 may include an output part 483. The driving circuitry 480 may include a filter 484. The signal processing part 481 may be connected to the input part 482, the output part 483, and the filter 484. The input part 482 may be connected to the plurality of sensors 450. The input part 482 may receive a first signal IS1, IS2, IS3, IS4, ISn from the plurality of sensors 450. The output part 483 may transmit a second signal OS1, OS2, OS3, OS4, OSn to the plurality of coils 440. The filter 484 may remove noise included in the first signal IS1, IS2, IS3, IS4, ISn transmitted from the plurality of sensors 450. For example, the button 410 may operate (e.g., the operations described with reference to FIGS. 9A to 9D) based on the second signal OS1, OS2, OS3, OS4, OSn transmitted to the plurality of coils 440, and noise may be included in a signal sensed by the plurality of sensors 450 due to the operation of the button 410. The filter 484 may remove noise included in a signal sensed by the plurality of sensors 450 due to the operation of the button 410. The signal processing part 481 may generate the second signal OS1, OS2, OS3, OS4, OSn based on the first signal IS1, IS2, IS3, IS4, ISn from which the noise is removed through the filter 484. For example, the filter 484 may remove noise by using an algorithm that removes signals transmitted at a predetermined time interval from a time at which the first signal IS1, IS2, IS3, IS4, ISn is transmitted from the plurality of sensors 450. The signal processing part 481 may receive the first signal IS1, IS2, IS3, IS4, ISn through the input part 482 and transmit the second signal OS1, OS2, OS3, OS4, OSn through the output part 483.

According to an embodiment, the driving circuitry 480 may receive the first signal IS1, IS2, IS3, IS4, ISn from the plurality of sensors 451, 452, 453, 454, 450n. The driving circuitry 480 may be connected to the plurality of sensors 450, and may receive the first signal IS1, IS2, IS3, IS4, ISn from the plurality of sensors 450. The first signal IS1, IS2, IS3, IS4, ISn may be generated by the method described with reference to FIGS. 7A and 7B. For example, the first signal IS1, IS2, IS3, IS4, ISn may include information related to a change in an electromagnetic force based on the movement of the magnet 430. The plurality of sensors 450 may sense information related to an electromagnetic force formed by the movement of the magnet 430 (e.g., a change in magnetic flux formed by the magnet 430, a magnitude of an induced current, an intensity of a magnetic field, a gap between the magnet and the sensor), and may transmit the information to the driving circuitry 480. The first signal IS1, IS2, IS3, IS4, ISn may be referred to as an "input signal." The first signal IS1, IS2, IS3, IS4, ISn may be referred to as a "sensing signal."

According to an embodiment, the first signal IS1, IS2, IS3, IS4, ISn sensed by each of the plurality of sensors 450 may be transmitted to the driving circuitry 480 at different times. For example, a time at which a first-first signal IS1 sensed by the first sensor 451 is transmitted to the driving circuitry 480 and a time at which a first-second signal IS2 sensed by the second sensor 452 is transmitted to the driving circuitry 480 may be different. For example, referring to FIG. 10A, when the button 410 is pressed along a sliding direction S1, the first-first signal IS1 may be transmitted to the driving circuitry 480 before the first-second signal IS2. For example, referring to FIG. 10A, when the button 410 is pressed along the sliding direction S1, the first-first signal IS1 sensed by the first sensor 451, the first-second signal IS2 sensed by the second sensor 452, a first-third signal IS3 sensed by the third sensor 453, and a first-fourth signal IS4 sensed by the fourth sensor 454 may be sequentially transmitted to the driving circuitry 480. The driving circuitry 480 may identify an order in which the first signal IS1, IS2, IS3, IS4, ISn is transmitted from each of the plurality of sensors 450. The driving circuitry 480 may transmit the second signal OS1, OS2, OS3, OS4, OSn to the button assembly 400 or a display (e.g., the display 220 of FIGS. 2 and 3) based on the order in which the first signal IS1, IS2, IS3, IS4, ISn is transmitted from each of the plurality of sensors 450. The driving circuitry 480 may display, on the display 220, a screen corresponding to the order in which the first signal IS1, IS2, IS3, IS4, ISn is transmitted, based on the order in which the first signal IS1, IS2, IS3, IS4, ISn is transmitted from each of the plurality of sensors 450. A memory (e.g., the memory 130 of FIG. 1) may store instructions related to the screen corresponding to the order in which the first signal IS1, IS2, IS3, IS4, ISn is transmitted.

According to an embodiment, the driving circuitry 480 may transmit the second signal OS1, OS2, OS3, OS4, OSn to the coil 440. The driving circuitry 480 may be connected to the plurality of coils 440, and may transmit the second signal OS1, OS2, OS3, OS4, OSn to the plurality of coils 440. The second signal OS1, OS2, OS3, OS4, OSn may be generated by the method described with reference to FIGS. 8 to 9D. For example, the second signal OS1, OS2, OS3, OS4, OSn may include information related to a voltage supplied to the coil 440. The button 410 may operate in different manners according to a type (e.g., a waveform of a voltage, an intensity of a voltage) and an order of the second signal OS1, OS2, OS3, OS4, OSn transmitted to the coil 440. The second signal OS1, OS2, OS3, OS4, OSn may be referred to as an "output signal." The second signal OS1, OS2, OS3, OS4, OSn may be referred to as a "feedback signal."

According to an embodiment, the second signal OS1, OS2, OS3, OS4, OSn transmitted from the driving circuitry 480 may be transmitted to each of the coils 440 at different times. For example, a time at which a second-first signal OS1 is transmitted to the first coil 441 and a time at which a second-second signal OS2 is transmitted to the second coil 442 may be different. For example, referring to FIG. 10B, the second-first signal OS1 may be transmitted to the coil 440 before the second-second signal OS2. For example, referring to FIG. 10B, the second-first signal OS1 transmitted to the first coil 441, the second-second signal OS2 transmitted to the second coil 442, a second-third signal OS3 transmitted to the third coil 443, and a second-fourth signal OS4 transmitted to the fourth coil 444 may be sequentially transmitted to the coils 440 corresponding to each. The button 410 may operate according to an order of the second signal OS1, OS2, OS3, OS4, OSn transmitted to the plurality of coils 440. For example, referring to FIG. 10B, as the second signal OS1, OS2, OS3, OS4, OSn is sequentially transmitted to the first coil 441, the second coil 442, the third coil 443, and the fourth coil 444, the button 410 may vibrate along a haptic direction S2.

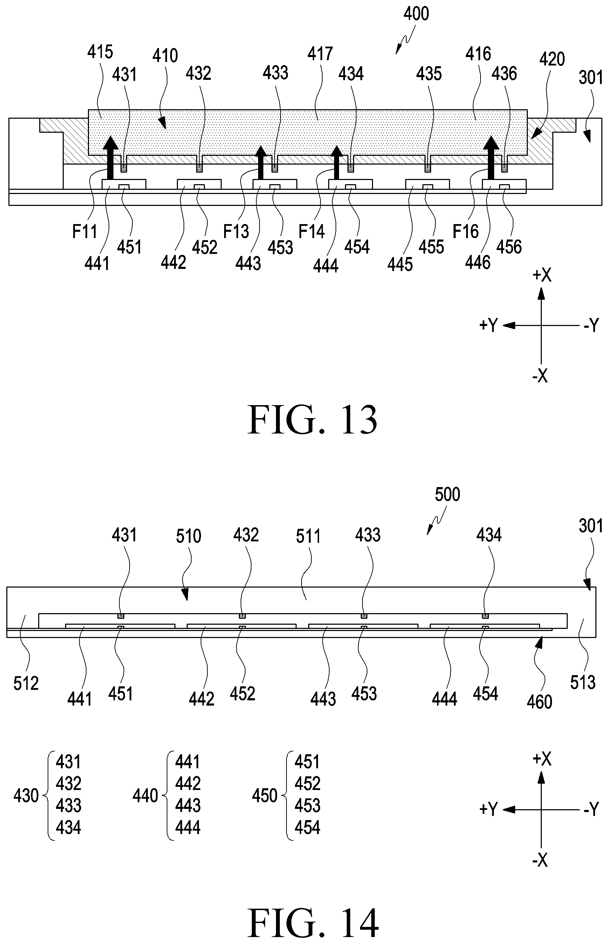

FIG. 11 is a view illustrating an operation of the button assembly 400 according to an embodiment of the disclosure. The components described with reference to FIG. 11 may be partially or entirely the same as the components described with reference to FIGS. 1 to 10B. The components described with reference to FIG. 11 may be partially or entirely the same as the components described with reference to FIGS. 12 and 14.

According to an embodiment, a direction F1, F2 of a magnetic force applied to one of the plurality of magnets 430 (e.g., the first magnet 431 or the second magnet 432) may be different from a direction F3, F4 of a magnetic force applied to another of the plurality of magnets 430 (e.g., the third magnet 433 or the fourth magnet 434). For example, the first coil 441 may generate a repulsive force F1 with respect to the first magnet 431, and the third coil 443 may generate an attractive force F3 with respect to the third magnet 433. Referring to FIG. 11, the repulsive forces F1, F2 may be applied to the first and second magnets 431, 432, and the attractive forces F3, F4 may be applied to the third and fourth magnets 433, 434. Referring to FIG. 11, a direction of a current supplied to the first and second coils 441, 442 and a direction of a current supplied to the third and fourth coils 443, 444 may be opposite to each other. The driving circuitry (e.g., the driving circuitry 480 of FIGS. 10A and 10B) may adjust a direction of a current supplied to each of the plurality of coils 440, and thereby adjust a direction of a magnetic force applied to each of the plurality of magnets 430.

FIG. 12 is a view illustrating an operation of the button assembly 400 according to an embodiment of the disclosure. The components described with reference to FIG. 12 may be partially or entirely the same as the components described with reference to FIGS. 1 to 11. The components described with reference to FIG. 12 may be partially or entirely the same as the components described with reference to FIG. 14.

According to an embodiment, gaps G1, G2, G3, G4 between the magnets 430 and the coils 440 may be differently formed along the second direction (e.g., the +Y direction) in which the button 410 extends. For example, a first gap G1 between the first magnet 431 and the first coil 441 may be greater than a second gap G2 between the second magnet 432 and the second coil 442. For example, a third gap G3 between the third magnet 433 and the third coil 443 may be greater than a fourth gap G4 between the fourth magnet 434 and the fourth coil 444. A magnitude of a first repulsive force formed by the first coil 441 with respect to the first magnet 431 may be greater than a magnitude of a second repulsive force formed by the second coil 442 with respect to the second magnet 432. A magnitude of a third repulsive force formed by the third coil 443 with respect to the third magnet 433 may be greater than a magnitude of a fourth repulsive force formed by the fourth coil 444 with respect to the fourth magnet 434. The driving circuitry (e.g., the driving circuitry 480 of FIGS. 10A and 10B) may adjust a magnitude of a current supplied to each of the plurality of coils 440, and thereby adjust a magnitude of a magnetic force applied to each of the plurality of magnets 430.

Referring to FIG. 12, the button 410 may be inclined with respect to the second direction (e.g., the +Y direction). The button 410 may have an inclination angle θ with respect to the second direction +Y. The user may press a portion of the button 410. The button 410 may include a first portion 413 receiving a load W and a second portion 414 not receiving the load W. The first portion 413 may be positioned farther from the coil 440 than the second portion 414. A magnitude of a first load W1 at a position corresponding to the first magnet 431 may be greater than a second load W2 at a position corresponding to the second magnet 432. According to another embodiment of the disclosure, a repulsive force applied to a first magnet corresponding to the first portion 413 receiving the load W may be greater than a repulsive force applied to a second magnet corresponding to the second portion 414 not receiving the load W. According to another embodiment of the disclosure, although the load is applied to the button 410, the equilibrium of the button 410 may be maintained due to the difference in the repulsive forces applied to the first portion 413 and the second portion 414 of the button 410.

FIG. 13 is a view illustrating an operation of the button assembly 400 according to an embodiment of the disclosure. The components described with reference to FIG. 13 may be partially or entirely the same as the components described with reference to FIGS. 1 to 12.

According to an embodiment, magnitudes F13, F14 of a magnetic force applied to magnets (e.g., the third magnet 433 and the fourth magnet 434) relatively located at a central portion among the plurality of magnets 430 may be less than magnitudes F11, F16 of a magnetic force applied to magnets (e.g., the first magnet 431 and a sixth magnet 436) relatively located at edges among the plurality of magnets 430. The magnitude of the magnetic force applied to the plurality of magnets 430 may increase as it becomes closer to the housing 301. The button 410 may include a first edge 415 and a second edge 416 disposed adjacent to the housing 301. The button 410 may include a central portion 417 connecting the first edge 415 and the second edge 416. The magnitudes F11, F16 of the magnetic force applied to the magnets 431, 436 corresponding to the first and second edges 415, 416 may be greater than the magnitudes F13, F14 of the magnetic force applied to the magnets 433, 434 corresponding to the central portion 417. A magnitude of a current supplied to the coils 441, 446 corresponding to the first and second edges 415, 416 may be greater than a magnitude of a current supplied to the coils 443, 444 corresponding to the central portion 417. Due to the structure described above, damage to the edge portions 415, 416, which are disposed adjacent to the housing 301 and have a strong repulsive force or frictional force by the housing 301, may be reduced.

FIG. 14 is a view conceptually illustrating a portion of a cross-sectional view of a button assembly 500 according to an embodiment of the disclosure. The components described with reference to FIG. 14 may be partially or entirely the same as the components described with reference to FIGS. 1 to 13.

According to an embodiment, the button assembly 500 may include a magnet 430, a coil 440, a sensor 450, and a button assembly circuit board 460. The description of the magnet 430, the coil 440, the sensor 450, and the button assembly circuit board 460 may be equally applied from the description of the magnet 430, the coil 440, the sensor 450, and the button assembly circuit board 460 described with reference to FIGS. 1 to 13.

According to an embodiment, the button assembly 500 may include a button 510. The button 510 may be integrally formed with the housing 301. The button 510 may form a surface of the housing 301. The button 510 may be movable toward the sensor 450. The magnet 430 may move together with the button 510. The button 510 may be a portion of the housing 301 including a deformable material.

According to an embodiment, the button 510 may include a deformable portion 511. The deformable portion 511 may be movable toward an inside of the housing 301. The deformable portion 511 may include a material having elasticity. The deformable portion 511 may move toward the sensor 450. The button 510 may include a first support portion 512 and a second support portion 513. The first support portion 512 and the second support portion 513 may support the deformable portion 511. The deformable portion 511 may connect the first support portion 512 and the second support portion 513. The plurality of sensors 450 may be disposed between the first support portion 512 and the second support portion 513.

An electronic device includes a housing and a button exposed to an outside of the housing. A user may press the button to input a manipulation signal to the electronic device. The button generates an electrical signal in a physical manner. When the size of the button is large, it may be unclear which portion of the button the physical signal is input to. When providing a haptic function through the button, a haptic operation by a physical manner may be limited.

An objective to be solved in the disclosure may be to clarify a signal input through a button.

An objective to be solved in the disclosure may be to provide various haptic functions through a button.

The technical problem to be solved by the present disclosure is not limited to the above-mentioned problem, and may be variously determined within a range that does not depart from the spirit and scope of the present disclosure.

The electronic device according to various embodiments of the disclosure may arrange a plurality of sensors along a direction in which a button extends, thereby increasing accuracy of an input signal through the button.

The electronic device according to various embodiments of the disclosure may arrange a plurality of magnets and a plurality of coils along a direction in which a button extends, thereby providing various haptic functions.

The effects obtainable from the present disclosure are not limited to the effects mentioned above, and other effects not mentioned will be clearly understood by those skilled in the art to which the present disclosure pertains from the following description.

An electronic device (e.g., 101 of FIGS. 1 to 13) according to an embodiment of the disclosure may include a housing (e.g., 301 of FIGS. 1 to 13) including a side portion (e.g., 310 of FIGS. 1 to 13).

The electronic device (e.g., 101 of FIGS. 1 to 13) according to an embodiment of the disclosure may include a button assembly (e.g., 400 of FIGS. 1 to 13) disposed along the side portion (e.g., 310 of FIGS. 1 to 13) of the housing (e.g., 301 of FIGS. 1 to 13), at least a portion of which is visually exposed to an outside of the housing (e.g., 301 of FIGS. 1 to 13).

The button assembly (e.g., 400 of FIGS. 1 to 13) according to an embodiment of the disclosure may include a button (e.g., 410 of FIGS. 1 to 13) movably disposed in the side portion (e.g., 310 of FIGS. 1 to 13) of the housing (e.g., 301 of FIGS. 1 to 13).

The button assembly (e.g., 400 of FIGS. 1 to 13) according to an embodiment of the disclosure may include a magnet (e.g., 430 of FIGS. 1 to 13) connected to the button (e.g., 410 of FIGS. 1 to 13).

The button assembly (e.g., 400 of FIGS. 1 to 13) according to an embodiment of the disclosure may include a coil (e.g., 440 of FIGS. 1 to 13) configured to receive a current supplied thereto and facing the magnet (e.g., 430 of FIGS. 1 to 13).

The button assembly (e.g., 400 of FIGS. 1 to 13) according to an embodiment of the disclosure may include a plurality of sensors (e.g., 450 of FIGS. 1 to 13) configured to sense information related to an electromagnetic force between the magnet (e.g., 430 of FIGS. 1 to 13) and the coil (e.g., 440 of FIGS. 1 to 13) and arranged along a direction in which the button (e.g., 410 of FIGS. 1 to 13) extends.

The magnet (e.g., 430 of FIGS. 1 to 13) according to an embodiment of the disclosure may include a plurality of magnets (e.g., 430 of FIGS. 1 to 13) arranged along a direction in which the button (e.g., 410 of FIGS. 1 to 13) extends.

The coil (e.g., 440 of FIGS. 1 to 13) according to an embodiment of the disclosure may include a plurality of coils (e.g., 440 of FIGS. 1 to 13) arranged along a direction in which the button (e.g., 410 of FIGS. 1 to 13) extends and corresponding to the plurality of magnets (e.g., 430 of FIGS. 1 to 13) and the plurality of sensors (e.g., 450 of FIGS. 1 to 13).

According to an embodiment of the disclosure, when a gap between the magnet (e.g., 430 of FIGS. 1 to 13) and the coil (e.g., 440 of FIGS. 1 to 13) changes, an induced current may be configured to be generated in the coil (e.g., 440 of FIGS. 1 to 13).

The electronic device (e.g., 101 of FIGS. 1 to 13) according to an embodiment of the disclosure may include driving circuitry (e.g., 480 of FIGS. 1 to 13) connected to the plurality of sensors (e.g., 450 of FIGS. 1 to 13) and the plurality of coils (e.g., 440 of FIGS. 1 to 13).

The driving circuitry (e.g., 480 of FIGS. 1 to 13) according to an embodiment of the disclosure may be configured to receive, from the plurality of sensors (e.g., 450 of FIGS. 1 to 13), a first signal related to an electromagnetic force between the magnet (e.g., 430 of FIGS. 1 to 13) and the coil (e.g., 440 of FIGS. 1 to 13).

According to an embodiment of the disclosure, a first time at which the first signal is transmitted from one of the plurality of sensors (e.g., 450 of FIGS. 1 to 13) to the driving circuitry (e.g., 480 of FIGS. 1 to 13) may be different from a second time at which the first signal is transmitted from another of the plurality of sensors (e.g., 450 of FIGS. 1 to 13) to the driving circuitry (e.g., 480 of FIGS. 1 to 13).

The driving circuitry (e.g., 480 of FIGS. 1 to 13) according to an embodiment of the disclosure may include a filter (e.g., 484 of FIGS. 1 to 13) configured to remove noise included in the first signal.

The driving circuitry (e.g., 480 of FIGS. 1 to 13) according to an embodiment of the disclosure may be configured to transmit, to the plurality of coils (e.g., 440 of FIGS. 1 to 13), a second signal related to a current supplied to the plurality of coils (e.g., 440 of FIGS. 1 to 13).

According to an embodiment of the disclosure, a third time at which the second signal is transmitted from the driving circuitry (e.g., 480 of FIGS. 1 to 13) to one of the plurality of coils (e.g., 440 of FIGS. 1 to 13) may be different from a fourth time at which the second signal is transmitted to another of the plurality of coils (e.g., 440 of FIGS. 1 to 13).

According to an embodiment of the disclosure, when a current is supplied to the coil (e.g., 440 of FIGS. 1 to 13), a magnetic force including an attractive force and a repulsive force may be formed between the coil (e.g., 440 of FIGS. 1 to 13) and the magnet (e.g., 430 of FIGS. 1 to 13).

According to an embodiment of the disclosure, a magnitude of a first magnetic force applied to one of the plurality of magnets (e.g., 430 of FIGS. 1 to 13) may be different from a magnitude of a second magnetic force applied to another of the plurality of magnets (e.g., 430 of FIGS. 1 to 13).

According to an embodiment of the disclosure, a direction of a first magnetic force applied to one of the plurality of magnets (e.g., 430 of FIGS. 1 to 13) may be different from a direction of a second magnetic force applied to another of the plurality of magnets (e.g., 430 of FIGS. 1 to 13).

According to an embodiment of the disclosure, a magnitude of a first magnetic force applied to one of the plurality of magnets (e.g., 430 of FIGS. 1 to 13) corresponding to an edge (e.g., 415, 416 of FIGS. 1 to 13) of the button (e.g., 410 of FIGS. 1 to 13) may be greater than a magnitude of a second magnetic force applied to another of the plurality of magnets (e.g., 430 of FIGS. 1 to 13) corresponding to a central portion (e.g., 417 of FIGS. 1 to 13) of the button (e.g., 410 of FIGS. 1 to 13).

The button assembly (e.g., 400 of FIGS. 1 to 13) according to an embodiment of the disclosure may include a support member (e.g., 420 of FIGS. 1 to 13) disposed between the housing (e.g., 301 of FIGS. 1 to 13) and the button (e.g., 410 of FIGS. 1 to 13).

The electronic device (e.g., 101 of FIGS. 1 to 13) according to an embodiment of the disclosure may include a printed circuit board (e.g., 340 of FIGS. 1 to 13) disposed inside the housing (e.g., 301 of FIGS. 1 to 13) and connected to the plurality of sensors (e.g., 450 of FIGS. 1 to 13).

The button assembly (e.g., 400 of FIGS. 1 to 13) according to an embodiment of the disclosure may include a plurality of magnets (e.g., 430 of FIGS. 1 to 13) arranged along a direction in which the button (e.g., 410 of FIGS. 1 to 13) extends.

The button assembly (e.g., 400 of FIGS. 1 to 13) according to an embodiment of the disclosure may include a plurality of coils (e.g., 440 of FIGS. 1 to 13) corresponding to the plurality of magnets (e.g., 430 of FIGS. 1 to 13) and configured to generate a magnetic force in each of the plurality of magnets (e.g., 430 of FIGS. 1 to 13).

The electronic device (e.g., 101 of FIGS. 1 to 13) according to an embodiment of the disclosure may include driving circuitry (e.g., 480 of FIGS. 1 to 13) connected to the plurality of coils (e.g., 440 of FIGS. 1 to 13) and configured to adjust a current supplied to the plurality of coils (e.g., 440 of FIGS. 1 to 13).

According to an embodiment of the disclosure, an intensity of a current supplied to each of the plurality of coils (e.g., 440 of FIGS. 1 to 13) may be different from each other.

According to an embodiment of the disclosure, a time during which a current is supplied to each of the plurality of coils (e.g., 440 of FIGS. 1 to 13) may be different from each other.

According to an embodiment of the disclosure, a direction of a magnetic force applied to each of the plurality of magnets (e.g., 430 of FIGS. 1 to 13) may be different from each other.

The electronic device 101 according to an embodiment of the disclosure may include the button assembly 400 disposed in at least a portion of a lateral side of the housing 301.

The button assembly 400 according to an embodiment of the disclosure may include the button 410 configured to move in a first direction.

The button assembly 400 according to an embodiment of the disclosure may include the magnet 430 configured to move according to a movement of the button 410.

The button assembly 400 according to an embodiment of the disclosure may include the coil 440 facing the magnet 430 and configured to provide feedback to the button 410 based on a voltage supplied to the coil 440.

The button assembly 400 according to an embodiment of the disclosure may include the sensor 450 configured to sense a change in an electromagnetic force based on the movement of the magnet 430 and aligned with the coil 440 and the magnet 430.

The magnet 430 according to an embodiment of the disclosure may be disposed between the button 410 and the coil 440, and between the button 410 and the sensor 450.

The coil 440 according to an embodiment of the disclosure may include a plurality of coils 440 corresponding to the plurality of magnets 430, respectively.

The sensor 450 according to an embodiment of the disclosure may include a plurality of sensors 450 corresponding to the plurality of magnets 430, respectively.

According to an embodiment of the disclosure, the plurality of magnets 430, the plurality of coils 440, and the plurality of sensors 450 may be arranged in the first direction.

The driving circuitry 480 according to an embodiment of the disclosure may be configured to identify an operation input to the button 410 based on the first signal transmitted from each of the plurality of sensors 450.

The driving circuitry 480 according to an embodiment of the disclosure may be configured to transmit, to the plurality of coils 440, a second signal which is a voltage supplied to the plurality of coils 440.

The plurality of magnets 430 according to an embodiment of the disclosure may be configured to move based on the second signal supplied to the plurality of coils 440.

According to an embodiment of the disclosure, when a voltage is supplied to the coil 440, a magnetic force including an attractive force and a repulsive force may be formed between the coil 440 and the magnet 430.

The electronic device 101 according to an embodiment of the disclosure may further include the printed circuit board 340 disposed in the housing 301.

The button assembly 400 according to an embodiment of the disclosure may include the button assembly circuit board 460 on which the sensor 450 is disposed, the button assembly circuit board 460 extending into the housing 301 and being connected to the printed circuit board 340.

A method for operating the electronic device 101 according to an embodiment of the disclosure may include an operation of moving, in a first direction, the button 410 disposed in at least a portion of a lateral side of the housing 301 together with the magnet 430.

The method for operating the electronic device 101 according to an embodiment of the disclosure may include an operation of sensing, by the sensor 450 facing the magnet 430 in the first direction, a change in an electromagnetic force based on the movement of the magnet 430 in the first direction.

The method for operating the electronic device 101 according to an embodiment of the disclosure may include an operation of forming a magnetic force between the magnet 430 and the coil 440 based on a voltage supplied to the coil 440 facing the magnet 430 in the first direction.

The electronic device according to various embodiments disclosed in the present document may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the present document is not limited to the aforementioned devices.

The various embodiments of the present document and the terms used herein are not intended to limit the technical features described in the present document to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the present document, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in various embodiments of the present document may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

The various embodiments of the present document may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to an embodiment disclosed in the present document may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{TM}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to various embodiments, each component (e.g., a module or a program) of the aforementioned components may include a single entity or a plurality of entities, and some of the plurality of entities may be separately disposed in another component. According to various embodiments, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

While specific embodiments have been described in the detailed description of the disclosure, it will be apparent to those of ordinary skill in the art that various modifications may be made without departing from the scope of the disclosure.

Although the disclosure has been described and illustrated with reference to an embodiment, it should be understood that the embodiment is not intended to limit the disclosure but is provided for illustration. It will be apparent to those skilled in the art that various changes may be made in form and detail without departing from the overall scope of the disclosure, including the appended claims and equivalents thereof.

## Claims

1. An electronic device (101) comprising:
a housing (301); and
a button assembly (400) disposed in at least a portion of a lateral side of the housing (301),
wherein the button assembly (400) comprises:
a button (410) configured to move in a first direction;
a magnet (430) configured to move according to a movement of the button (410);
a coil (440) facing the magnet (430) and configured to provide feedback to the button (410) based on a voltage supplied to the coil (440); and
a sensor (450) configured to sense a change in an electromagnetic force based on the movement of the magnet (430) and aligned with the coil (440) and the magnet (430),
wherein the magnet (430) is disposed between the button (410) and the coil (440), and between the button (410) and the sensor (450).

2. The electronic device of claim 1,
wherein the magnet (430) includes a plurality of magnets (430) arranged along a second direction in which the button (410) extends,
wherein the coil (440) includes a plurality of coils (440) corresponding to the plurality of magnets (430), respectively,
wherein the sensor (450) includes a plurality of sensors (450) corresponding to the plurality of magnets (430), respectively.

3. The electronic device of claim 2,
wherein the plurality of magnets (430), the plurality of coils (440) and the plurality of sensors (450) are arranged in the first direction.

4. The electronic device of claim 2 or 3, further comprising:
driving circuitry (480) connected to the plurality of sensors (450) and the plurality of coils (440).

5. The electronic device of claim 4,
wherein the driving circuitry (480) is configured to receive, from the plurality of sensors (450), a first signal related to an electromagnetic force between the magnet (430) and the sensor (450).

6. The electronic device of claim 5,
wherein the driving circuitry (480) is configured to identify an operation input to the button (410) based on the first signal transmitted from each of the plurality of sensors (450).

7. The electronic device of claim 5 or 6,
wherein the driving circuitry (480) includes a filter (484) configured to remove noise included in the first signal.

8. The electronic device of any one of claims 4 to 7,
wherein the driving circuitry (480) is configured to transmit, to the plurality of coils (440), a second signal which is a voltage supplied to the plurality of coils (440).

9. The electronic device of claim 8,
wherein the plurality of magnets (430) is configured to move based on the second signal supplied to the plurality of coils (440).

10. The electronic device of any one of claims 2 to 9,
wherein a magnitude of a first magnetic force applied to one of the plurality of magnets (430) is different from a magnitude of a second magnetic force applied to another of the plurality of magnets (430).

11. The electronic device of any one of claims 2 to 10,
wherein a direction of a first magnetic force applied to one of the plurality of magnets (430) is different from a direction of a second magnetic force applied to another of the plurality of magnets (430).

12. The electronic device of any one of claims 2 to 11,
wherein a magnitude of a first magnetic force applied to one of the plurality of magnets (430) corresponding to an edge (415, 416) of the button (410) is greater than a magnitude of a second magnetic force applied to another of the plurality of magnets (430) corresponding to a central portion (417) of the button (410).

13. The electronic device of any one of claims 1 to 12,
wherein the button assembly (400) further comprises a support member (420) disposed between the housing (301) and the button (410).

14. The electronic device of any one of claims 1 to 13, further comprising:
a printed circuit board (340) disposed in the housing (301), and
wherein the button assembly (400) further comprises: a button assembly circuit board (460) on which the sensor (450) is disposed, the button assembly circuit board (460) extending into the housing (301) and being connected to the printed circuit board (340).

15. A method for operating an electronic device (101), the method comprising:
an operation of moving, in a first direction, a button (410) disposed in at least a portion of a lateral side of a housing (301) together with a magnet (430);
an operation of sensing, by a sensor (450) facing the magnet (430) in the first direction, a change in an electromagnetic force based on a movement of the magnet (430) in the first direction; and
an operation of forming a magnetic force between the magnet (430) and a coil (440) based on a voltage supplied to the coil (440) facing the magnet (430) in the first direction.
